Europäisches Patentamt

European Patent Office

Office européen des brevets

(11) Publication number: **0 406 746 A2**

# EUROPEAN PATENT APPLICATION

(21) Application number: 90112551.8

(51) Int. Cl.5: **H05B 3/86**

(22) Date of filing: 02.07.90

(30) Priority: 03.07.89 US 375090

(43) Date of publication of application:
09.01.91 Bulletin 91/02

(84) Designated Contracting States:
BE DE ES FR GB IT SE

(71) Applicant: PPG INDUSTRIES, INC.
One PPG Place
Pittsburgh Pennsylvania 15272(US)

(72) Inventor: **Winter, John Anthony**
**106 North Jackson Road**
**Pittsburgh (Bellevue) PA15202(US)**
Inventor: **Bartrug, Bruce Allan**
**3271 Dorothy Street**
**Lower Burrell, PA 15068(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) Heatable windshield notch sealant.

(57) The electrical connections for an electrically heatable windshield are sealed prior to the laminating operation to prevent gas from entering the interior of the windshield through the bus bar leads when the windshield is subjected to the elevated temperatures and pressures of the laminating operation.

EP 0 406 746 A2

# HEATABLE WINDSHIELD NOTCH SEALANT

Background of the Invention
————— — —— —————

1. Field of the Invention

This invention relates to sealing edge portions of a laminated transparency and in particular to sealing the notch area of a heatable, laminated windshield to prevent air from diffusing into the interior of the windshield during lamination.

2a. Technical Considerations

It has been known to pass electric current through a transparent conductive coating on a transparency in order to raise its temperature. Generally, the transparency includes a spaced pair of bus bars electrically interconnected by a conductive coating. The bus bars are usually connected by leads to a power source to distribute current from the power source through the coating. Where the transparency is a laminated windshield, passing current through the coating elevates the temperature of the laminate sufficient to melt snow or ice that has accumulated on an exposed surface of the windshield.

A heatable windshield usually includes a cut-out section, or notch area, along an edge of one of the plies of the windshield that exposes a lead portion of the bus bars and provides a location at which the power source can be connected to the windshield. During lamination, the windshield components are exposed to elevated temperatures and pressures. After lamination, air bubbles have been observed within the windshield in the vicinity of the notch area. It is believed that this defect is the result of air diffusing through the bus bar leads into the interior of the windshield during lamination. Not only is the bubbling a visible and objectionable defect but excessive bubbling within the windshield may reduce the windshield strength in this area.

It would be advantageous to prevent diffusion of air into the interior of the windshield, and in particular at the notch area, during lamination.

2b. Patents of Interest

U.S. Patent Nos. 3,789,191 and 3,789,192 to Spindler teach a heated window with a temperature sensing device, wherein the electrical leads to the temperature sensor are embedded within the plastic interlayer of the window.

U.S. Patent No. 3,790,752 to Boaz et al. teaches a heatable, laminated windshield in which an electrical connection is made within the windshield to a transparent interlayer which has a conductive coating thereon. The connection is sealed so that moisture cannot penetrate the laminate.

U.S. Patent Nos. 3,794,809 to Beck; 4,543,466 to Ramus; and 4,789,784 to Nikodem et al. teach an electrically heatable windshield with opposing bus bars that are electrically interconnected by an electroconductive coating on an interior surface of the windshield. In Beck, the leads to the bus bars extend outside of the windshield assembly. In Ramus and Nikodem et al., the leads extend into a cut-out portion, or terminal area, along an edge of the windshield. Electrical power is provided to the leads at the terminal area.

U.S. Patent No. 4,593,175 to Bowser et al. teaches a coating composition to prevent moisture from penetrating along a power cable of an electrically heated architectural glazing unit.

Summary of the Invention
————— — —— —————

The present invention teaches a laminate wherein an exposed surface of a gas permeable material which extends beyond one of the plies of the laminate is sealed prior to bonding the plies together to form a unitary assembly. In one particular embodiment of the invention, a surface of a first ply of the laminate includes a pair of opposing bus bars interconnected by an electroconductive coating. The bus bars are made of a gas permeable material and are bonded to the first ply's surface. The bus bars extend to an electrical connection area along a peripheral edge of the laminate. A second ply overlays the first ply and includes a cut-out section at the connection area that exposes a portion of the bus bars. The exposed portions of the bus bars are sealed prior to bonding the plies together to prevent gas from entering the interior of the laminate through the bus bars.

In an additional embodiment of the invention, the laminate is a heatable windshield. The bus bars are a conductive ceramic enamel bonded to an interior surface of one of the glass plies of the windshield. The entire electrical connection area is sealed with a sealant, such as a butyl-based sealant or a silicone elastomer sealant.

Brief Description of the Drawings

Figure 1 is a plan view of a heatable windshield incorporating features of the present invention, with portions removed for clarity.

Figure 2 is an enlarged view of the notch area of the windshield shown in Figure 1, with portions removed for clarity.

Figure 3 is a view taken along line 3-3 of Figure 2 showing a sealant in the notch area of the windshield.

Figure 4 is a view taken along line 4-4 of Figure 2 showing a sealant in the notch area of the windshield.

Detailed Description of the Invention

The description of the invention is taught in connection with a heatable, laminated transparency comprised of two glass plies bonded together by a thermoplastic interlayer and an electroconductive coating positioned between the plies. The preceding construction represents a typical heatable windshield construction, but it is understood that the invention can be practiced to make any construction of heatable transparencies having two or more plies of glass or plastic or any combination thereof. Furthermore, the invention is not limited to fabricating an automotive windshield but may be practiced in the fabrication of any transparency where there is a problem of gas diffusing into the interior of a laminated transparency.

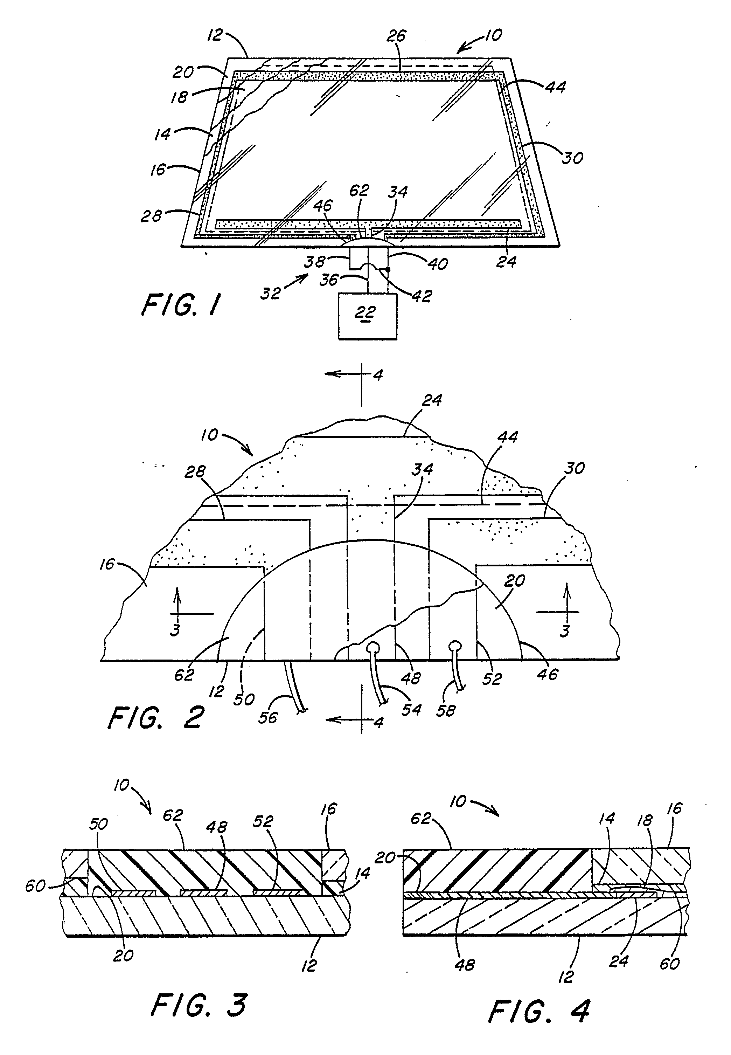

Referring to Figures 1, 3, and 4, the transparency 10 is a heatable windshield which includes an outboard glass ply 12, i.e. the ply furthest from the vehicle interior, a plastic interlayer 14, which may be polyvinylbutyral as is commonly used for laminated windshields, and an inboard glass ply 16. Although not limiting in the present invention, in the preferred embodiment of the invention, the windshield 10 has a the heating arrangement including an electroconductive coating 18 preferably positioned on the inside surface 20 of the outboard glass ply 12. Various coatings may exhibit the necessary combination of transparency and electroconductivity required to serve as the heating element for the transparency 10. A preferred coating is similar to that disclosed in U.S. Patent No. 4,610,770 to Gillery, which teachings are hereby incorporated by reference. These coatings generally include one or more silver films between pairs of zinc stannate films, each of which may be applied sequentially by magnetron sputtering. In one particular embodiment of the invention, the coating taught in U.S. Patent No. 4,610,770 exhibits an approximate resistivity of about 7 to 8 ohms per square with a single silver film layer having a thickness of about 110 Angstroms.

Electrical power from a power supply 22 passes to the electroconductive coating 18 through a bus bar and lead arrangement which, although not limiting in the present invention, is similar to the double feed bus bar arrangement disclosed in U.S. Patent No.4,820,902 to Gillery, which teachings are incorporated by reference. Referring to Figure 1, a bottom bus bar 24 and top bus bar 26 are positioned on surface 20 of the glass ply 12 in contact with the coating 18. The electrical connection to the upper bus bar 26 is made by a pair of extensions of the bus bar 26, i.e. leads 28 and 30, each extending along opposing side portions and bottom edge of the windshield 10 to a terminal area 32. Electrical access to the bottom bus bar 24 is had by a lead 34 which extends from the bus bar 24 to the terminal area 32. Although not limiting in the present invention, the electrical connections to the bottom bus bar 24 and to the top bus bar 26 via leads 28 and 30 are preferably made along the bottom edge of the windshield 10 at the terminal 32 as illustrated in Figure 1, but it should be appreciated that the connections may be made to the windshield 10 at any convenient location.

With continued reference to Figure 1, wire 36 connects the bottom bus bar 24 to one pole of an electrical power source 22. Leads 28 and 30 leading to the top bus bar 26 are connected in common to the opposite pole of power source 22 by means of wires 38 and 40 and jumper wire 42.

Referring also to Figure 2, the leads 28 and 30 are electrically insulated from the coating 18 and bottom bus bar 24 in any convenient manner known in the art to ensure that the power to the coating 18 is delivered through the bus bars 24 and 26. Although not limiting in the present invention, the edge of the coating 18 is spaced from edge of the transparency 10, as indicated by line 44 in Figures 1 and 2 and the leads 28 and 30 are positioned within this uncoated, marginal area.

The bus bars and leads are preferably made of a silver containing ceramic frit material, as is well known in the art, and may be applied in any convenient manner, e.g. screen printing onto the glass surface 20 of the glass ply 12. After printing, the frit material is heated, or "fired", to melt the frit material and fuse it onto the glass surface. An opaque ceramic enamel border (not shown) may optionally be applied on surface 20 of the glass ply 12 to hide the bus bars 24 and 26 and leads 28 and 30.

After the bus bars and leads are fired onto the glass ply 12 and the coating 18 is applied to surface 20, the interlayer 14 is positioned between the glass sheets 12 and 16 and the entire assembly is laminated in any convenient manner available in the art, to form a unitary structure, i.e. a laminated windshield. With reference to Figures 2, 3, and 4, inner ply 16 includes a cut-out or notch area 46 to expose portion 48 of lead 34 and portions 50 and 52 of leads 28 and 30, respectively, and provide access for electrical connection to the bus bars 24 and 26 from the power source 22 (shown only in Figure 1). In particular, referring to Figure 2, wires 54, 56, and 58 are electrically interconnected to lead portions 48, 50, and 52, respectively, in any convenient manner known in the art, e.g. soldering. Bubbles have been observed on the inner surface 60 of the inner glass ply 16 along the leads 28, 30 and 34 and along bottom bus bar 24 in the vicinity of the notch area 46. It is believed that these bubbles are caused by air diffusing through the exposed portions 48, 50, and 52 of the silver ceramic leads 28, 30, and 34, respectively, and into the interior of the windshield 10 during lamination. The bubbles detract from the aesthetics of the windshield and excessive bubbling may reduce the strength of the windshield 10 in the notch area 46.

To protect against this condition and with continued reference to Figures 2 through 4, an air impervious sealant 62 fills the notch area 46 to prevent air from diffusing through the lead portions and into the interior of the windshield 10. The sealant 62 must be able to survive the elevated temperatures and pressures of a laminating cycle, which for automotive windshields are typically on the order of about 275°F (135°C) and 200 psi (1.38 x 10⁶ Pa). In addition, the sealant material preferably should not give off toxic fumes or other gases during lamination. Furthermore, the sealant material should not adversely affect the silver lead portions 48, 50, and 52, or any exposed coating 18 in the notch area 46. In particular, sulfur containing sealant materials should be used avoided because the sulfur or sulfur compounds may react with the silver, forming silver sulfides which will reduce the electroconductivity of the leads and/or coating in the notch area 46. Since electrical power to the windshield 10 will be provided through the notch area 46, the sealant materials should also be non-electroconductive to prevent shorting of the windshield circuitry by electrically interconnecting the lead portion 48 with the adjacent lead portions 50 and 52. Lastly, the sealant material must be sufficiently resilient so as to not induce any undue stresses on the windshield in the notch area 46.

Sealants that have been used in the practice of the invention include silicone elastomers, and in particular, elastomer materials available from Dow Corning Corp., Michigan, under the tradenames DOW CORNING 732™ multi-purpose sealant and DOW CORNING® 982 silicone insulating glass sealant. DOW CORNING 732™ sealant is a one-component material that dries tack free in about 20 minutes and forms a tough, rubbery solid. Material data sheets for this sealant indicate that this material will corrode copper and copper containing alloys, magnesium, and zinc and zinc containing alloys. Therefore the use of DOW CORNING 732™ sealant with these metals should be avoided. Although the DOW CORNING 732™ sealant satisfactorily seals the notch area 46, during lamination of the windshield components, it has been observed to bubble, resulting in a less than desirable appearance. DOW CORNING® 982 sealant is a two-part, variable cure rate, high modulus, elastomeric sealant that provides good adhesion to uncoated and coated glass and will not bubble as severely as the DOW CORNING 732™ sealant during lamination. This sealant will cure within 15 to 60 minutes, depending on the ratio between the base and curing components of the sealant. In addition, it was found that increasing the amount of the curing component relative to the amount of the base component will reduce the amount of bubbling and reduce the curing time. Both the DOW CORNING 732 and 982 sealants will not flow under their own weight so that a thick layer of sealant can be used to fill the notch area 46 without the sealant flowing out of the notch area 46. These sealants are applied to the notch area 46 in any convenient manner and although not limiting to the present invention, the sealants are preferably applied using a caulking gun. A putty knife is used to smooth the surface of the sealant before it begins to cure.

Butyl based coating compositions similar to those disclosed in U.S. Patent No. 4,593,175 to Bowser et al., which teachings are incorporated by reference, have been used as sealants. In particular, the butyl based composition as described hereinbelow in Table 1 is based on the teachings of the patent and has been used to seal the notch area 46 in windshield 10.

4

TABLE 1

| Materials | Amount (Parts by Weight) |
|---|---|
| 1. BUTYL 165 | 100 |
| 2. VISTANEX LM, MS | 30 |
| 3. STATEX N-550 | 110 |
| 4. ZnO xx4 | 6 |
| 5. HI SIL EP | 10 |
| 6. UNION CARBIDE A-174 silane | 10 |
| 7. ESCOREZ 1315 | 60 |
| 8. VM&P NAPHTHA | 712 |

(1) BUTYL 165 is the registered trademark of Exxon Chemical Co. for an isobutylene-isoprene elastomer (11R).

(2) VISTANEX LM, MS is the registered trademark of Exxon Chemical Company for a high molecular weight polyisobutylene resin.

(3) STATEX N-550 is the registered trademark of Columbian Chemical Co. for a general purpose amorphous furnace black.

(4) Zinc oxide xx4 grade is manufactured by New Jersey Zinc Co.

(5) HI SIL EP is the registered trademark of PPG Industries, Inc. for a hydrated amorphous silica.

(6) UNION CARBIDE A-174 is the registered trademark of Union Carbide Corp. for a silane coupling agent; gamma-methacryoxpropyltrimethoxy silane.

(7) ESCOREZ 1315 is the registered trademark of Exxon Chemical Co. for a saturated hydrocarbon resin.

(8) VM&P NAPHTHA is varnish makers' naphtha; a solvent with a narrow boiling point.

This sealant dries in approximately 5 minutes but still remains tacky. Additional carbon black and/or filler material, such as e.g. hydrated silica, can be added to the formulation to reduce tack. The coating may be applied in any convenient manner known in the art, e.g. brush, dauber, or rollers. Although not limiting in the invention, the thickness of this sealant is preferably about 1 mil (0.025 mm). Since the butyl coating does not fill the notch area 46, additional fillers must be used if it is required that the windshield 10 have a flush notch area 46.

Although the sealant 62 has been shown to be a silicone elastomer or butyl based composition, it is expected that other materials may also be used to seal the lead portions 48, 50, and 52 in the notch area 46 such as, but not limited to soldering flux and epoxy materials.

In operation, after the windshield assembly 10 is prepressed prior to lamination, the interlayer 14 is removed from the notch area 46 and the electrical connectors 54, 56, and 58 or any other type of well known connector, are connected in any convenient manner to lead portions 48, 50, and 52, respectively. As an alternative, the interlayer 14 can be precut so that it does not extend into the notch area 46. The sealant 62 is then applied in the notch area 46 and allowed to dry or cure. The assembly 10 is then laminated.

Although the embodiment of the invention illustrated in Figures 1 through 4 show the entire notch area 46 completely filled by the sealant 62, it should be appreciated that only the exposed surface of the lead portions 48, 50, and 52 have to be coated with sealant 62. Furthermore, it is obvious that as more of the exposed surface of the leads 48, 50, and 52 is covered with the sealant 62, the more effective the seal because of the reduced surface area that is available through which the air can enter the windshield 10 via the leads.

Based on the teachings of this disclosure, it should be apparent that the amount of exposed lead area and the lead material porosity, as well as the type of sealant and the temperature/pressure conditions during lamination each contribute to the effectiveness of the sealing arrangement. In particular, for example, if the laminate is fabricated under lower temperature and/or pressure conditions than those discuss earlier, the sealant material can be less sensitive to these factors and still provide adequate sealing of the notch area. Furthermore, if the exposed lead area is reduced and/or the porosity of the lead material is reduced, a less effective sealant material can be used to adequately seal the notch area.

The forms of the invention shown and described in this specification represents illustrative preferred embodiments and it is understood that various changes may be made without departing from the spirit of the invention as defined in the following claimed subject matter.

## Claims

1. In a method of forming a laminate including the steps of applying a gas permeable material to a major surface of a first sheet, positioning a second sheet in overlaying relation to said first sheet such that selected portions of said material are positioned therebetween and other portions of said material are exposed, and securing said first sheet to said second sheet, wherein gas moves through said exposed portions of said material to between said sheets during said securing step, the improvement comprising: sealing said exposed portions of said material to prevent gas from moving through said material to between said sheets during said securing step.

2. The method as in claim 1 wherein said laminate includes an electroconductive coating on said surface of said first sheet, means to direct electrical current through said coating, and means to provide electrical access to said directing means, wherein said gas permeable material is said electrical access means, and further wherein said sealing step includes prior to said securing step, coating said exposed portion of said gas permeable material.

3. The method as in claim 2 wherein said sealing step includes coating said exposed material portion with a sealant selected from a group consisting of butyl based sealants and silicone elastomer sealants.

4. In a method of forming a laminate including the steps of applying an electroconductive coating on a surface of a first sheet, positioning a second sheet in overlaying relation to said first sheet such that said coating is positioned therebetween, and securing said first sheet to said second sheet, the improvement comprising:
providing electrical access to said coating;
providing an opening in said second sheet to expose at least a portion of said electrical access; and
preventing gas from moving between said sheets in the vicinity of said electrical access during said securing step.

5. The method as in claim 4 wherein said electrical access providing step includes providing first and second electroconductive bus bars along opposing edges of and interconnected by said coating, wherein a portion of each of said bus bars extends to a peripheral edge of said first sheet and said opening providing step includes providing a notch area along a peripheral edge of said second sheet in the vicinity of said portions of said bus bars such that said bus bar portions are exposed after said positioning step.

6. The method as in claim 5 wherein said preventing step includes sealing at least a portion of said exposed bus bar portions prior to said securing step.

7. The method as in claim 6 wherein said sealing step includes applying a temperature and pressure resistant, non-electrically conductive sealant over said bus bar portions.

8. The method as in claim 7 wherein said sealing step includes covering the entire exposed bus bar portions.

9. The method as in claim 8 wherein said sealing step further includes filling said notch area with said sealant.

10. The method as in claim 9 wherein said coating step includes applying a butyl based sealant to said exposed bus bar portions.

11. The method as in claim 9 wherein said coating step includes applying a silicone elastomer sealant to said exposed said bus bar portions.

12. The method as in claim 5 wherein said bus bars are a silver containing material and said sealing step includes coating at least a portion of said exposed bus bar portions with an essentially sulfur free sealant.

13. The method as in claim 12 wherein said coating step includes applying a butyl based sealant to said exposed bus bar portions.

14. The method as in claim 12 wherein said coating step includes applying a silicone elastomer sealant to said exposed said bus bar portions.

15. A laminate made in accordance with claim 1.

FIG. 1

FIG. 2

FIG. 3

FIG. 4